# EUROPEAN PATENT SPECIFICATION

(11) **EP 0 669 383 B1**
(45) Date of publication and mention of the grant of the patent: **28.04.1999**
(21) Application number: 95101218.6
(22) Date of filing: 30.01.1995
(51) Int. Cl.: C09D 167/08

(54) **Curable compositions with improved adhesion and their use for coating substrates**
Härtbare Zusammensetzungen mit verbesserter Haftung und ihre Verwendung zum Beschichten von Substraten
Compositions durcissables à adhérence améliorée et leur utilisation pour le revêtement de substrats

(30) Priority: 25.02.1994 US 201910
(43) Date of publication of application: 30.08.1995
(73) Proprietor: SARTOMER COMPANY, INC., Exton, PA 19341 (US)
(72) Inventor: Costin, Richard, West Chester, Pennsylvania 19380 (US); Bailey, Michael, Boothwyn, Pennsylvania 19061 (US); Ceska, Gary W., West Chester, Pennsylvania 19380 (US)
(74) Representative: Chaillot, Geneviève

(56) References cited:
- WO-A-89/09244
- FR-A- 2 165 947

## Description

This invention relates to curable and cured fatty acid-modified alkyd resin compositions that exhibit improved substrate adhesion. In particular, this invention relates to fatty acid-modified alkyd (polyester) resin compositions in which the incorporation of a metal salt of an α, β-ethylenically unsaturated carboxylic acid results in improved substrate adhesion.

Fatty acid-modified alkyd resin compositions, and the processes for their preparation, are well known in the art. Generally, these compositions are obtained by the reaction of polybasic organic acids, polyhydric alcohols, and fatty acids. They have long been used in the painting industry as coatings such as lacquers, enamels, coating compounds, and the like. To use these alkyd resins as coatings generally requires the addition of on aromatic or oxygenated solvent, for example turpentine oil, toluene, xylene, methyl propyl ketone or butyl acetate in order to achieve a viscosity suitable for application.

Fatty acid-modified alkyd coatings with a high solids content are particularly useful because, by increasing the molecular weight of the resin, improved physical characteristics and a diminished drying time are achieved. However, an increase in the molecular weight results in an increase in the solvents required, which solvents are detrimental to environment and useless once the coating film forms. The solvent requirement may be decreased by increasing the alkyd resin oil length. The "oil length" of an oil modified alkyd resin may be defined as the weight percent of the resin contributed by the aliphatic, "fatty" chains of the fatty acids. The oil length of an alkyd resin is important to the physical properties of the paint or coating which the resin forms. Oil length affects solubility, hardness, gloss, color preserving ability, weather resistance, hardening time and storage life of the paints made from alkyd resins. Increasing the oil length is reported to enhance the flexibility of the resulting film, to increase its solubility in organic solvents, and to decrease film hardness. However, increasing the oil length produces a coating in which the drying time is increased.

U.S Patent N°. 5,039,740 discloses coating compositions in which the solvent requirement is diminished yet the oil length of the alkyd does not exceed 35%, comprising a blend of a fatty acid-modified alkyd resin and a vinyl unsaturated monomer or oligomer that is capable of free radical initiated polymerization. The resulting resins exhibit good physical and cure properties. However, they exhibit poor adhesion to substrates.

The problem to be solved by the present invention therefore consists in providing curable and cured fatty acid-modified alkyd coating compositons, having improved substrate adhesion. It has been surprisingly discovered that improved substrate adhesion may be achieved by incorporating a metal salt of an acrylic or methacrylic acid into these compositions.

The term "substrate", as used herein, is intended to include metal, glass, plastic, nylon, wood, and paper.

The fatty acid-modified alkyd resin component of the present invention preferably have oil lengths from 15 to 50 percent. They may be prepared from polybasic organic acids, polyhydric alcohols, and fatty acids by any known method. Generally, the polybasic acid, polyhydric alcohol, and fatty acid are charged together and reacted. Alternatively, the polyhydric alcohol and fatty acid are reacted to form a monoester which is then reacted with the polybasic organic acid. Use of a gelation inhibitor in these processes may be desirable. The polybasic organic acids suitable for use in preparation of the alkyd resin constituent are aromatic, aliphatic, and alicyclic saturated and unsaturated polybasic acids, and include such acids as phthalic acid, adipic acid, isophthalic acid, terephthalic acid, maleic acid, trimellitic acid, tetrahydrophthalic acid, sebacic acid, naphthalic acid, chlorendic acid, heptanedioic acid and succinic.acid Preferred acids include phthalic, isophthalic and maleic acids.

Polyhydric alcohol components are those which can react with the carboxyl groups of polybasic acids in an esterification reaction and which have at least two hydroxyl groups. Examples of suitable alcohols include ethylene glycol, diethylene glycol, glycerin, pentaerythritol, trimethylol ethane, trimethylol propane, neopentyl glycol, propylene glycol, sorbitol, dipropylene glycol, 1,6-hexanediol, 1,3-butylene glycol, dipentaerythritol and triethylene glycol. The preferred polyols are trimethanol ethane, pentaerythritol, neopentyl glycol and propylene glycol.

The fatty acid modifying agent desirably, but not necessarily, is partially unsaturated, and may be supplied as an acid or as an oil containing the acid. The reactive fatty acids have at least one unsaturated site. Suitable fatty acids include linoleic acid, linolenic acid, oleic acid, eleosteric acid, and stearic acid. Generally, useful fatty acid will have molecular weigths in the range of 140 to 300.

Fatty acids used in the manufacture of alkyds may be derived from biological oils. Oils commonly used in the manufacture of alkyds include tung oil, oiticica oil, deshydrated castor oil, fish oil, linseed oil, safflower oil, soya oil, tall oil acids, cottonseed oil and coconut oil. Particularly useful oils are soya oil and tall oil, which consist of mixtures of suitable fatty acids.

Soya oil, for example, contains about 25% oleic, 51% linoleic, and 9% linolenic acids, the remaining 15% soya fatty acids being saturated. Tall oil comprises about 46% oleic, 41% linoleic, and 3% linolenic acids, the remaining 8% tall oil fatty acids being saturated.

Preferably the coating composition of the present invention further comprises at least a vinyl unsaturated monomer or oligomer capable of free radical initiated addition polymerization. Such vinyl unsaturated monomers or oligomers include acrylates, methacrylates, allyl-functional compounds, alpha-olefins having from 8 to 22 carbon atoms, vinyl ethers, vinyl benzenes, acrylamides, and epoxy and urethane oligomers. They preferably have a molecular weight not less than 200. Some illustrative acrylates and methacrylates include isoctyl acrylate, isobornyl acrylate, stearyl (meth)acrylate, n-lauryl acrylate, cyclohexyl acrylate, 2-ethoxyethyl(meth)acrylate, 2-phenoxyethyl(meth) acrylate, isodecyl(meth) acrylate, 1,4-butanediol di(meth)acrylate, 1,3-butanediol di(meth)acrylate, 1,6-hexanediol di(meth)acrylate, diethylene glycol diacrylate, neopenthyl glycol di(meth)acrylate, ethoxylated Bisphenol A di(meth)acrylate, tripropylene glycol diacrylate and trimethylolpropane tri(meth)acrylate, pentaerythritol tri(meth)acrylate, ethoxylated and propoxylated triméthylolpropane tri(meth) acrylates. Typical allyl functional monomers include diallyl phtalate, diallyl maleate and allyl methacrylate.

The present invention is based on the discovery that the metal salt of an α, β-ethylenically unsaturated carboxylic acid can be advantageously blended with the above described fatty acid-modified alkyd resin component to produce coating compositions which exhibit improved adhesion to substrates. The preferred metal salts used in the present invention are those of acrylic or methacrylic acid which correspond to the formula 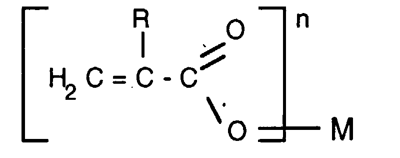 wherein M is the metal, n is the valency of the metal M and R is selected from the hydrogen atom and the methyl group. The metal M of the metal salt useful in the present invention may be aluminium, antimony, barium, cadmium, calcium, iron, lead, magnesium, mercury, molybdenum, nickel, potassium, silver, titanium, and zinc. Particularly preferred is zinc. The preferred metal salt is zinc diacrylate.

The metal salt may be incorporated into the alkyd resin component to achieve the coating composition of the present invention by admixing the grind component of the resin and the metal salt of the α, β-ethylenically unsaturated carboxylic acid obtained by reacting the metal compound and the acid. Alternatively, the α, β-ethylenically unsaturated carboxylic acid and the metal compound, i.e., metal oxide, metal hydroxide and metal carbonate, may be admixed into the grind component of the alkyd resin component and reacted in the mixture to form metal salts in situ.

The amount of metal salt to be used in the present invention should be an amount effective to yield an improvement in adhesion of the coating composition to the substrate. Generally, the amount used should be an amount from 0.5 to 20 percent by weight based on the weight of the coating composition. Preferably, amounts of from 1 to 10 percent by weight are used.

The coatings prepared from the compositions of the present invention may be prepared for application in any conventional manner by the addition of pigments, solvents, metal salt drying agents, antioxidants, dispersing aids, stabilizers, and other additives that may be desirable depending on the nature of the fatty acid modified alkyd resin component as well as the end use of the coating. Conventional free radical initiators, such as peroxides and room temperature stable azo compounds capable of thermal decomposition to produce free radicals, may be used to cure the compositions of the present invention. Useful peroxides include methyl ethyl ketone peroxide, benzoyl peroxide, and t-butyl hydroperoxide. Suitable azo compounds include 2,2-azo bis (2,4-dimethylpentanenitrile), 2,2-azo bis (2-methylbutanenitrile), and 2,2-azo bis (2-methylpropanenitrile).

The amount of free radical initiator to be used should be an amount effective to initiate polymerization of the coating composition at room temperature or on exposure to heat. Generally, from 0.3 to 5 weight percent of free radical initiator based on the weight of the coating composition is used. The free radical initiator may be used alone or in combination with a metal salt drying agent, used in an amount effective to aid in the decomposition of the free radical initiator. Generally, the metal salt drying agent is used in an amount of from 0.01 to 5, preferably from 0.02 to 1.0, weight percent based on the weight of the coating composition. Examples of suitable metal salt drying agents include cobalt, calcium and zinconium naphtenates.

The coating compositions of the present invention may be coated on a substrate using any of the conventional coating techniques such as dipping, spraying, or roller coating. The coating compositions may be used as films and coatings in a variety of settings. They may find particular utility for example in automotive, industrial, or maintenance, in which adhesion of the coating to a substrate is critical. Examples of suitable substrates include :
- metals such as iron, steel, zinc and aluminum,
- synthetic resins such as polyolefins, polycarbonate, polystyrene, polyethylene terephtalate, polyvinylchloride and ABS resins,
- materials such as wood, rubber and melamine-formol laminates.

The resulting coating composition may be formulated to dry and cure at low temperature from 20°C to 95°C in a forced air oven, or by baking at temperatures above 95°C. The invention will be clarified further by the following examples.

### EXAMLES 1 to 6

In the following Table 1, all of the ingredients of the coating compositions are expressed in parts by weight, unless otherwise noted.
Part A, the grind portion, was mixed using a high shear mechanical mixer and Part B, the letdown portion, mixed with a mechanical mixer using minimal shear. Subsequently, Part A and Part B were mixed together in equal portions. For those formulations requiring an initiator, the initiator was hand-mixed into the formulation prior to application. Drawdowns of 76 µm dry film thickness were prepared on clean aluminium test panels and the films cured under two sets of conditions, i.e 7 days at 25°C and 30 minutes at 71°C in a fored air oven followed by 24 hours at 25°C. Cure time was measured as tack-free time based on thumb touch. Cross hatch adhesion was measured by ASTM D3359. Pencil gouge hardness was measured by ASTM D3364. Methyl ethyl ketone double rubs, in which a cloth saturated with methyl ethyl ketone was rubbed across the panels until the film rubbed off, where performed to measure early chemical resistance. The coating properties of the cured compositions are reported in tables 2 and 3. As it will easily appear, examples 1 and 2 are comparative.

**TABLE 2**

| COATING PROPERTIES | | | | | | |
|---|---|---|---|---|---|---|
| CURE CONDITIONS : 7 DAYS AT 25°C | | | | | | |
| EXAMPLE | 1 | 2 | 3 | 4 | 5 | 6 |
| Cross Hatch Adhesion % loss | 0 | 50 | 8 | 0 | 10 | 20 |
| Hardness | 2H | 4H | 4H | 6H | 3H | 4H |
| Early chemical Resistance | 9 | 53 | 48 | 50 | 35 | 28 |

**TABLE 3**

| COATING PROPERTIES | | | |
|---|---|---|---|
| CURE CONDITIONS : 30 MINUTES AT 71°C + 24HRS AT 25°C | | | |
| EXAMPLE | 1 | 5 | 6 |
| Cross Hatch Adhesion % Loss | 0 | 20 | 40 |
| Hardness | 3H | 5H | 6H |
| Early chemical Resistance | 7 | 97 | >100 |

**TABLE 1**

| EXAMPLE | 1 | 2 | 3 | 4 | 5 | 6 |
|---|---|---|---|---|---|---|
| PART A (Grind Portion) | | | | | | |
| Polyester Alkyd ¹ | 50.8 | 50.8 | 50.8 | 50.8 | 50.8 | 50.8 |
| Zinc Oxide | 11.8 | 11.8 | 6.8 | 6.8 | 11.8 | 11.8 |
| Rutile Titanium Dioxide | 118.1 | 118.1 | 118.1 | 118.1 | 118.1 | 118.1 |
| Xylenes | 19.3 | ------ | ----- | ------ | ----- | ----- |
| HDDMA² | ----- | 19.3 | 19.3 | 19.3 | ----- | ----- |
| HDDA³ | ----- | ------ | ----- | ----- | 19.3 | 19.3 |
| Zinc Diacrylate | ------ | ------ | 5.0 | ----- | 5.0 | ----- |
| Zinc Dimethacrylate | ------ | ------ | ----- | 5.0 | ----- | 5.0 |

| PART B (Let down portion) | | | | | | |
|---|---|---|---|---|---|---|
| Polyester Alkyd ¹ | 156.6 | 156.6 | 156.6 | 156.6 | 156.6 | 156.6 |
| Xylenes | 38.0 | ------- | ------- | ------- | ------- | ------- |
| HDDMA | ----- | 38.0 | 38.0 | 38.0 | ------- | ------- |
| HDDA | ----- | ------- | ------- | -------- | 38.0 | 38.0 |
| 6% Colbat Naphthenate | 1.3 | 1.3 | 1.3 | 1.3 3 | 1.3 | 1.3 |
| 24% Zirconium Naphthenate | 0.6 | 0.6 | 0.6 | 0.6 | 0.6 | 0.6 |
| 6% Calcium Naphthenate | 1.3 | 1.3 | 1.3 | 1.3 | 1.3 | 1.3 |
| Anti-skinning Agent ⁴ | 0.4 | 0.4 | 0.4 | 0.4 | 0.4 | 0.4 |

| INITIATOR | | | | | | |
|---|---|---|---|---|---|---|
| Methyl ethyl ketone peroxide | ----- | 2.0 | 2.0 | 2.0 | 2.0 | 2.0 |

| | | | | | | |
|---|---|---|---|---|---|---|
| 1. High solids soya bean modified polyester alkyd available as CHEMPOL 11-3132® from Cook Composites & Polymers, Kansas City, Missouri. | | | | | | |
| 2. 1,6-hexanediol dimethacrylate available as SR-239 from Sartomer Company, Inc., Exton, Pennesylvania. | | | | | | |
| 3. 1,6-hexanediol diacrylate available as SR-238 from Sartomer. | | | | | | |
| 4. Methyl ethyl ketoxime available as ANTI-SKIN B ®from Troy Chemical, Newark, New Jersey. | | | | | | |

## Claims

1. A curable coating composition having improved substrate adhesion, comprising at least :
(a) a fatty acid-modified alkyd resin ; and
(b) an effective amount of a metal salt of an α, β-ethylenically unsaturated carboxylic acid.

2. The composition of claim 1, wherein the α, β-ethylenically unsaturated carboxylic acid is acrylic acid or methacrylic acid.

3. The composition of claim 1 or claim 2, wherein the metal is selected from antimony, barium, cadmium, calcium, iron, lead, magnesium, aluminium, mercury, molybdenum, nickel, potassium, silver, titanium, and zinc.

4. A composition according to any of claims 1 to 3, wherein the metal salt of the α, β-ethylenically unsaturated carboxylic acid is present in an amount from 0.5 to 20 percent by weight of the coating composition.

5. A composition according to any of claims 1 to 4, further comprising a polymerization initiating effective amount of a free radical initiator.

6. The composition of claim 5, wherein the free radical initiator is present in an amount from 0.3 to 5 percent by weight of the coating composition.

7. A composition according to any of claims 1 to 6, further comprising an effective amount of a metal salt drying agent.

8. The composition of claim 7, wherein the metal salt drying agent is present in an amount from 0.01 to 5 percent by weight of the coating composition.

9. A composition according to any of claims 1 to 8, wherein the metal salt of the α, β-ethylenically unsaturated carboxylic acid is formed in situ from an unsaturated carboxylic acid and a suitable reactive metal compound.

10. A composition according to any of claims 1 to 9, further comprising a vinyl unsaturated monomer or oligomer capable of free radical initiated polymerization.

11. A composition according to any of claims 1 to 10, wherein the fatty acid-modified alkyd resin has an oil length of 15 to 50 percent.

12. A cured composition provided by curing a composition according to any of claims 1 to 11.

13. A method for adhering a cured fatty acid modified alkyd coating composition to a substrate, comprising the steps of:
(a) coating a substrate with a curable coating composition according to any of claims 1 to 11 and
(b) curing the said coating composition.

14. A substrate having a fatty acid modified alkyd coating or film formed on at least one portion of its surfaces, the coating or film being formed from curing a composition according to any of claims 1 to 11.

## Patentansprüche

1. Härtbare Beschichtungszusammensetzung mit verbesserter Substrathaftung, enthaltend mindestens:
(a) ein fettsäuremodifiziertes Alkydharz und
(b) eine wirksame Menge eines Metallsalzes einer *α,β*-ethylenisch ungesättigten Carbonsäure.

2. Zusammensetzung nach Anspruch 1, bei der es sich bei der α,β-ethylenisch ungesättigten Carbonsäure um Acrylsäure oder Methacrylsäure handelt.

3. Zusammensetzung nach Anspruch 1 oder 2, bei der das Metall unter Antimon, Barium, Cadmium, Calcium, Eisen, Blei, Magnesium, Aluminium, Quecksilber, Molybdän, Nickel, Kalium, Silber, Titan und Zink ausgewählt ist.

4. Zusammensetzung nach einem der Ansprüche 1 bis 3, bei der das Metallsalz der α,β-ethylenisch ungesättigten Carbonsäure in einer Menge von 0,5 bis 20 Gewichtsprozent, bezogen auf die Beschichtungszusammensetzung, vorliegt.

5. Zusammensetzung nach einem der Ansprüche 1 bis 4, die außerdem auch noch eine zur Initiierung der Polymerisation wirksame Menge eines radikalischen Initiators enthält.

6. Zusammensetzung nach Anspruch 5, bei der der radikalische Initiator in einer Menge von 0,3 bis 5 Gewichtsprozent, bezogen auf die Beschichtungszusammensetzung, vorliegt.

7. Zusammensetzung nach einem der Ansprüche 1 bis 6, die außerdem auch noch eine wirksame Menge eines Metallsalz-Trocknungsmittels enthält.

8. Zusammensetzung nach Anspruch 7, bei der das Metallsalz-Trocknungsmittel in einer Menge von 0,01 bis 5 Gewichtsprozent, bezogen auf die Beschichtungszusammensetzung, vorliegt.

9. Zusammensetzung nach einem der Ansprüche 1 bis 8, bei der das Metallsalz der α,β-ethylenisch ungesättigten Carbonsäure in situ aus einer ungesättigten Carbonsäure und einer geeigneten reaktiven Metallverbindung gebildet wird.

10. Zusammensetzung nach einem der Ansprüche 1 bis 9, die außerdem auch noch ein radikalinitiiert polymerisierbares vinylisch ungesättigtes Monomer oder Oligomer enthält.

11. Zusammensetzung nach einem der Ansprüche 1 bis 10, bei der das fettsäuremodifizierte Alkydharz einen Ölgehalt von 15 bis 50 Prozent hat.

12. Gehärtete Zusammensetzung, erhalten durch Härtung einer Zusammensetzung nach einem der Ansprüche 1 bis 11.

13. Verfahren zum haftenden Aufbringen einer gehärteten, fettsäuremodifiziertes Alkyd enthaltenden Beschichtungszusammensetzung auf ein Substrat, bei dem man:
(a) ein Substrat mit einer härtbaren Beschichtungszusammensetzung nach einem der Ansprüche 1 bis 11 beschichtet und
(b) die Beschichtungszusammensetzung härtet.

14. Substrat mit einem fettsäuremodifiziertes Alkyd enthaltenden Überzug oder Film auf mindestens einem Teil seiner Oberflächen, wobei der Überzug oder Film durch Härtung einer Zusammensetzung nach einem der Ansprüche 1 bis 11 hergestellt wird.

## Revendications

1. Une composition de revêtement réticulable possédant une adhésion améliorée sur substrats, comprenant au moins :
(a) une résine alkyde modifiée par acide gras, et
(b) une quantité efficace d'un sel métallique d'un acide carboxylique α,β-éthyléniquement insaturé

2. La composition de la revendication 1, caractérisée en ce que l'acide carboxylique α,β-éthyléniquement insaturé est l'acide acrylique ou l'acide méthacrylique.

3. La composition de la revendication 1 ou de la revendication 2, caractérisée en ce que le métal est choisi parmi l'antimoine, le baryum, le cadmium, le calcium, le fer, le plomb, le magnésium, l'aluminium, le mercure, le molybdène, le nickel, le potassium, l'argent, le titane et le zinc.

4. Une composition selon l'une quelconque des revendications 1 à 3 caractérisée en ce que le sel métallique d'un acide carboxylique α,β-éthyléniquement insaturé est présent dans une quantité de 0,5 à 20 pour cent en poids de la composition du revêtement.

5. Une composition selon l'une quelconque des revendications 1 à 4, caractérisée en ce qu'elle comprend en outre une quantité efficace pour initier la polymérisation d'un initiateur de radicaux libres.

6. La composition de la revendication 5, caractérisée en ce que l'initiateur de radicaux libres est présent dans une quantité de 0,3 à 5 pour cent en poids de la composition de revêtement.

7. Une composition selon l'une quelconque des revendications 1 à 6, caractérisée en ce qu'elle comprend en outre une quantité efficace d'un agent siccatif sel métallique.

8. La composition de la revendication 7, caractérisée en ce que l'agent siccatif sel métallique est présent dans une quantité de 0,01 à 5 pour cent en poids de la composition de revêtement.

9. Une composition selon l'une quelconque des revendications 1 à 8, caractérisée en ce que le sel métallique d'acide carboxylique α,β-éthyléniquement insaturé est formé in situ à partir d'un acide carboxylique insaturé et d'un composé métallique réactif approprié.

10. Une composition selon l'une quelconque des revendications 1 à 9, caractérisée en ce qu'elle comprend en outre un monomère ou oligomère vinylique insaturé capable de polymérisation initiée par radicaux libres.

11. Une composition selon l'une quelconque des revendications 1 à 10, caractérisée en ce que la résine alkyde modifiée par acide gras possède une longueur d'huile de 15 à 50 pour cent.

12. Une composition réticulée obtenue par réticulation d'une composition selon l'une quelconque des revendications 1 à 11.

13. Un procédé pour faire adhérer une composition de revêtement réticulée d'alkyde modifié par acide gras sur un substrat, comprenant les étapes de :
a) revêtement du substrat au moyen d'une composition de revêtement réticulable selon l'une quelconque des revendications 1 à 11, et
b) réticulation de ladite composition de revêtement

14. Un substrat ayant un film ou revêtement d'alkyde modifié par acide gras formé sur au moins une partie de ses surfaces, ledit film ou revêtement étant formé par réticulation d'une composition selon l'une des revendications 1 à 11.
